(19) **Europäisches Patentamt**

**European Patent Office**

**Office européen des brevets**

(11) **EP 1 370 017 A1**

(12) **EUROPEAN PATENT APPLICATION**

(43) Date of publication:
**10.12.2003 Bulletin 2003/50**

(51) Int Cl.⁷: **H04H 1/00**, H04B 1/10,
H04L 27/26

(21) Application number: **02012734.6**

(22) Date of filing: **07.06.2002**

| (84) Designated Contracting States: | • **Wildhagen, Jens,** |
|---|---|
| **AT BE CH CY DE DK ES FI FR GB GR IE IT LI LU MC NL PT SE TR** | **Sony International (Europe) GmbH** |
| Designated Extension States: | **70327 Stuttgart (DE)** |
| **AL LT LV MK RO SI** | |
| | (74) Representative: **Müller - Hoffmann & Partner** |
| (71) Applicant: **Sony International (Europe) GmbH** | **Patentanwälte,** |
| **10785 Berlin (DE)** | **Innere Wiener Strasse 17** |
| | **81667 München (DE)** |
| (72) Inventors: | |
| • **Schill, Dietmar,** | |
| **Sony International (Europe) GmbH** | |
| **70327 Stuttgart (DE)** | |

(54) **Interference reduction for simulcast signals**

(57)     A receiver for simulcast signals and a method for receiving a simulcast signal transmitted via a distorted channel is described. By means of a bandpass filter, an initial digital signal is separated from the simulcast signal. This initial digital signal is subtracted from said simulcast signal, and as a result of the subtraction, an intermediate analogue signal is obtained. With respect to the initial digital signal, a channel estimation and equalization is performed. Thus, it is possible to estimate the channel's frequency response, to remove channel impairments due to frequency selective fading and/or to non-symmetric receiver input filter, and to generate a corrected digital signal. Said corrected digital signal, or a signal derived therefrom, is added to said intermediate analogue signal, in order to obtain the simulcast signal's analogue signal part.

Fig. 2

EP 1 370 017 A1

**Description**

The present invention relates to a receiver for a simulcast signal, with said simulcast signal comprising a digital signal part and an analogue signal part. Furthermore, the invention relates to a method for receiving a simulcast signal transmitted via a distorted channel.

Digital radio standards are becoming more and more important. E.g., the digital radio standard DRM (Digital Radio Mondiale) is a digital service in the broadcasting bands below 30 MHz. A simultaneous transmission of the conventional analogue and the new digital service will simplify and accelerate the introduction of the DRM system, since listeners of the analogue service are not lost during the introduction of DRM.

For this reason, the digital radio (or transmission) signal is transmitted, together with the conventional analogue radio (or audio or transmission) signal, in a so-called simulcast signal. In the European Patent Application EP-A-01118908.1, "DRM/AM Simulcast", the simulcast transmission signal and simulcast signal generators are described in detail. According to the solution described there, the DRM signal is transmitted within the upper sideband signal of the simulcast signal. Within the lower sideband, a correction signal is transmitted which is determined such that the envelope of the simulcast signal corresponds to the conventional AM signal.

The complete disclosure of the European Patent Application EP-A-01118908.1, "DRM/AM Simulcast", which has been filed by the applicant of the present application, is herewith incorporated into this specification by reference.

The simulcast system described in said invention is based on the assumption of a flat frequency response of the transmission channel (including the input filters on part of the receiver). In many cases, this assumption is not fulfilled, though. Due to the multipath propagation of the transmission channel, the channel may show a complex frequency response, which is the reason for the occurrence of frequency selective fading. Any deviation from a flat frequency response results in cross-talk from the DRM signal into the AM signal.

It is therefore an object of the invention to provide a receiver for a simulcast signal and a method for receiving a simulcast signal transmitted via a distorted channel, whereby cross-talk from the DRM signal into the AM signal is reduced, and whereby the signal quality of the AM signal is improved.

The object of the invention is solved by a receiver for a simulcast signal according to claim 1, and by a method for receiving a simulcast signal transmitted via a distorted channel according to claim 15. Preferred embodiments thereof are respectively defined in the respective following dependent subclaims. A computer program product according to the present invention is defined in claim 24 and a computer readable storage medium according to the present invention is defined in claim 25.

According to the invention, the receiver for a simulcast signal, said simulcast signal comprising a digital signal part and an analogue signal part, comprises filter means for separating an initial digital signal from said simulcast signal. Preferably, bandpass filter means are utilised. Furthermore, the receiver comprises subtractor means for subtracting said initial digital signal from said simulcast signal, in order to obtain an intermediate analogue signal. The receiver further comprises a channel estimation and equalization unit for estimating the channel's frequency response and for removing channel impairments due to frequency-selective fading and/or to non-symmetric receiver input filters, in order to generate a corrected digital signal. Adder means add said corrected digital signal or a signal derived therefrom to said intermediate analogue signal, in order to obtain an improved simulcast signal.

The main idea of the invention is that after the distorted digital signal has been separated from the simulcast signal, said digital signal can be used for estimating the channel's transmission characteristics. As soon as a model of the channel behaviour is known, the distortions of the digital signal that are due to multipath propagation or to non-symmetric receiver input filters can be eliminated. This step is called channel equalization, and as a result, a corrected digital signal with a considerably reduced amount of distortions is obtained. It is thus possible to replace the received digital signal by a corrected digital signal that exhibits a flat frequency response.

According to the invention, starting from this "regenerated" digital signal, it is possible to generate an improved simulcast signal. For this purpose, the regenerated digital signal is added to an intermediate analogue signal, which has been obtained by subtracting the distorted digital signal from the received simulcast signal. The distorted digital signal is replaced by the corrected digital signal, while the rest of the simulcast signal, the intermediate analogue signal, remains unchanged.

When the resulting regenerated simulcast signal is demodulated by means of an envelope demodulator, the amount of cross-talk from the digital signal part to the analog signal part is reduced due to the improved quality of the digital signal. The result is that the quality of the envelope of the simulcast signal is also improved and therefore the quality of the AM-envelope-demodulated audio or transmission signal is improved.

Thus, by performing a channel estimation and equalization for the digital signal part and replacing the digital signal part by a corrected digital signal, it is possible to improve the quality of the simulcast signal as a whole.

The invention can be used for scenarios where the AM signal is some kind of back-up for the digital signal part. A prerequisite is that the receiver can obtain proper synchronisation on the DRM signal part of the simulcast signal. Therefore, when the signal to noise ratio (SNR) is within the range between loss of the digital DRM audio service and loss of synchronisation of the DRM receiver, the invention can be employed. Depending on the transmission mode, this gap is of the order of 5 dB to 15 dB.

Furthermore, the invention is helpful for scenarios where AM and DRM convey different services that the listener wants to use in parallel. It would be particularly attractive for the introduction of a new data service into the DRM framework.

Preferably, said receiver further comprises decoding means for decoding said corrected digital signal, and/or demodulation means for demodulating said improved simulcast signal. Thus it is possible to decode a program transmitted via the digital channel and/or to demodulate a program transmitted via the analogue channel at the same time.

Preferably, said receiver comprises an FFT unit located in the digital signal processing path before said channel estimation and equalization means, for converting said initial digital signal from the time domain into the frequency domain, whereby said channel estimation and equalization unit processes said initial digital signal in the frequency domain.

Further preferably, said receiver comprises an IFFT unit located in the digital signal processing path behind said channel estimation and equalization means, for converting said corrected digital signal back into the time domain.

According to a preferred embodiment of the invention, the receiver comprises means for removing the initial digital signal's guard intervals, which are located in the digital signal processing path before said channel estimation and equalization means. Furthermore, the receiver comprises means for re-inserting corrected versions of said guard intervals into the corrected digital signal, which are located in the digital signal processing path after said channel estimation and equalization means.

Preferably, said receiver comprises means for performing a time and frequency correction of said initial digital signal, said means being located in the digital signal processing path before said channel estimation and equalization means and/or means for re-inserting the corrected time and frequency offsets after said channel estimation and equalization means (after IFFT).

According to a preferred embodiment of the invention, the receiver comprises a gain control unit for comparing the signal power of said corrected digital signal to the signal power of said initial digital signal, and for adapting the gain such that the signal power of said corrected digital signal is equal to the signal power of said initial digital signal.

Preferably, said gain control unit averages the signal power of said initial digital signal and of said corrected digital signal over a predefined period of time when determining said gain.

Further preferably, said gain control unit is provided with the respective signal powers by said channel estimation and equalization means on a symbol by symbol basis and updates said gain accordingly.

According to a preferred embodiment of the invention, the receiver comprises a time-correlation unit for correlating said corrected digital signal with said initial digital signal in order to determine a time delay between said two signals.

Preferably, said analogue signal processing path comprises a time delay unit for delaying said intermediate analogue signal by the time delay determined by said time-correlation unit.

Preferably, said receiver comprises memory means for storing said gain and/or said time delay for each station. Thus, the gain and/or the time delay don't have to be calculated each time the receiver is switched to a new program.

According to a preferred embodiment of the invention, said initial digital signal is modulated according to the OFDM (Orthogonal Frequency Division Multiplex) method.

Further preferably, said initial digital signal is a radio signal according to the DRM (Digital Radio Mondiale) standard.

The inventive method for receiving a simulcast signal transmitted via a distorted channel, with said simulcast signal comprising a digital signal part and an analogue signal part, is characterized by the following steps: First, an initial digital signal is separated from said simulcast signal. Then, said initial digital signal is subtracted from said simulcast signal in order to obtain an intermediate analogue signal. Next, a channel estimation and equalization is performed in order to estimate the channel's frequency response and to remove channel impairments due to frequency selective fading and/or to non-symmetric receiver input filters, in order to generate a corrected digital signal. Then, said corrected digital signal or a signal derived therefrom is added to said intermediate analogue signal.

The invention does not have to be implemented in hardware. The invention can also be realised as a computer program product which carries out the method steps as described above or which at least partly embodies the receiver as described above when said computer program product is executed on a computer, digital signal processor or the like.

Further objects and features of the present invention will become apparent from the following description of an exemplary embodiment thereof taken in conjunction with the accompanying figures, wherein

**Fig. 1** shows the structure of a simulcast signal comprising a lower sideband signal and a upper sideband signal; and

**Fig. 2** shows a block diagram of the receiver for simulcast signals according to the invention.

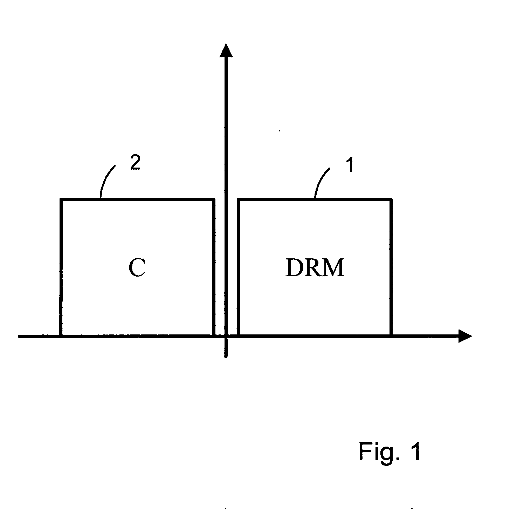

In Fig. 1, the structure of a simulcast signal is shown. By means of a simulcast signal, it is possible to transmit an analogue audio signal and the digital audio signal, e.g. the DRM (Digital Radio Mondiale) signal, at the same time. The digital DRM signal is transmitted within the upper sideband 1 of the simulcast signal. In the lower sideband 2, a correction signal C is transmitted. On part of the transmitter, the correction signal C has been determined in a way that the envelope of the whole simulcast signal is equal to the conventional AM transmission signal. Therefore, a double sideband envelope demodulator that demodulates the simulcast signal on part of the receiver reproduces the conventional audio or transmission signal.

A method for generating the simulcast signal as shown in Fig. 1, together with a description of the simulcast transmission signal and the simulcast signal generator, can be found in the European Patent Application EP-A-01118908.1, "DRM/AM Simulcast", which has been filed by the applicant of the present invention. In said application, an iterative method for determining the correction signal C shown in Fig. 1 is disclosed. The complete disclosure of said application is herewith incorporated into this specification by reference.

The simulcast system described so far is based on the assumption of a flat frequency response of the transmission channel, including the input filters on part of the receiver. Any deviation from a flat frequency response results in cross-talk from the DRM signal into the AM signal.

DRM itself uses a coherent modulation scheme, i.e. it has the capability of estimating the complex frequency response of the transmission channel within the spectrum that is occupied by the DRM signal itself. It is therefore possible to estimate the frequency response of the channel in this part of the transmission spectrum and to replace the received DRM signal with one that exhibits a flat frequency response of the channel.

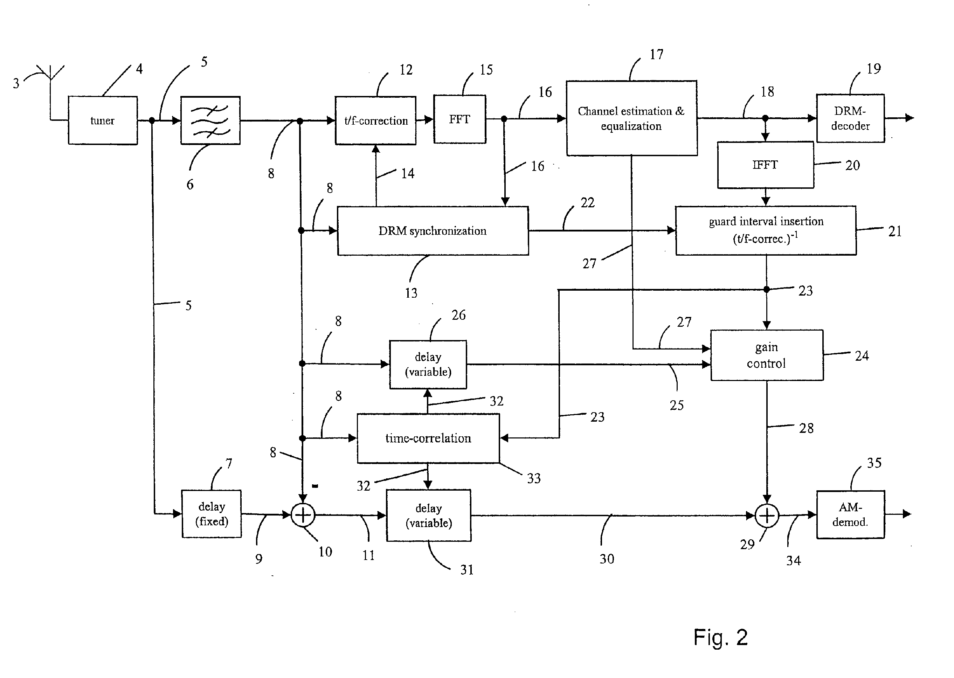

A receiver for a simulcast signal according to the invention is shown in Fig. 2. The transmitted signal is received via the antenna 3 and forwarded to the tuner 4, which selects the desired frequency band. The received simulcast signal 5 is forwarded to a bandpass filter 6 and to a fixed delay unit 7. The lower bound and the upper bound of the bandpass filter 6 are chosen such that the upper sideband passes the bandpass filter 6, while the lower sideband is suppressed. Thus, the DRM signal 8 is obtained separately.

The delay of the fixed delay unit 7 compensates the time delay caused by the bandpass filter 6. Both the DRM signal 8 and the delayed simulcast signal 9 are forwarded to a subtractor 10. Within the subtractor 10, the DRM signal 8 is subtracted from the delayed simulcast signal 9. At the output of the subtractor 10, an intermediate analogue signal 11 is obtained, which comprises the lower sideband part and the carrier signal of the received simulcast signal 5.

The DRM signal 8 obtained at the output of the bandpass filter 6 is the starting point of the digital signal processing path shown in the upper half of Fig. 2. The DRM signal 8 is input to a time/frequency correction unit 12, and to a synchronization unit 13. The DRM signal is modulated according to the modulation scheme OFDM (Orthogonal Frequency Division Multiplexing), which uses a multi carrier approach. The OFDM symbols are artificially prolonged by periodically repeating the "tail" of the symbol and precede the symbol with it. On part of the receiver, this so-called guard interval has to be removed again. The time/frequency correction unit 12 is responsible for performing time and frequency corrections to the DRM signal 8, and for removing said guard intervals. The synchronization unit 13 provides the time/frequency correction unit with a sync signal 14, containing the required values for time/frequency correction.

So far, the DRM signal has been processed in the time domain. It is advantageous to process the DRM signal in the frequency domain, because according to the OFDM standard, the subcarrier pulses are chosen as rectangular pulses in the frequency domain. In the FFT unit 15, a Fast Fourier Transform of the time domain DRM signal is carried out, and the frequency domain DRM signal 16 is generated. According to the invention, the frequency domain DRM signal 16 is forwarded to the channel estimation and equalization unit 17. First, the multipath propagation characteristics of the transmission channel are estimated. The transmitted symbols $a_{1,k}$ at time-slot 1 and subcarrier k are only disturbed by a factor $H_{1,k}$ which is the channel transfer function at the subcarrier frequency, and by additional white Gaussian noise n:

$$z_{1,k} = a_{1,k} \cdot H_{1,k} + n$$

The influence of the channel can be easily removed by dividing by $H_{1,k}$. Thus, it is rather simple to perform a channel equalization in the frequency domain. As a result, the channel equalized DRM signal 18 in the frequency domain is obtained, which is forwarded to the DRM decoder 19.

Additionally, the channel equalized DRM signal 18 is forwarded to the IFFT unit 20, and by means of an Inverse Fast Fourier Transform, the channel equalized DRM signal 18 is converted from the frequency domain back into the time domain. After the IFFT, the guard intervals of the OFDM modulation are regenerated and the time and frequency corrections are inverted. These tasks are accomplished within the inverse time/frequency correction unit 21, which receives a sync signal 22 from the synchronization unit 13, containing the values required for the inversion of the time/frequency correction that was performed in the time/frequency correction unit 12.

As a result, the corrected DRM signal 23 is obtained. Next, the relative amplitudes of the digital and the analogue signal have to be taken into account. For this purpose, the corrected DRM signal 23 is forwarded to the gain control unit 24. The appropriate gain value can either be transmitted within the DRM signal stream. Alternatively, the correct gain value can be obtained by comparing the power of the delayed DRM signal 25, which is obtained via the delay unit 26 from the DRM signal 8, with the power of the corrected DRM signal 23. This allows to set the gain of the gain control unit 24 to an appropriate value, such that the amplitude of the digital signal part relative to the analogue signal part is not changed. In order to cover the statistical behaviour of the transmission channel, it is advantageous to perform an averaging of the signal energies over a sufficiently long time.

This measurement of the signal strengths has to be performed only once at the start of the system. Then the gain control can be updated (27) on a symbol by symbol basis from the channel estimation and equalization unit 17. In the gain control unit 24, the product of the constant gain value and the variable correction value from the channel estimation is then multiplied with the corrected DRM signal 23, in order to adjust the power of said corrected DRM signal 23. At the output of the gain control unit 24, the power-adjusted and corrected DRM signal 28 is obtained. The power-adjusted corrected DRM signal 28 is connected to the first input of the adder 29. The delayed intermediate analogue signal 30, which is obtained via the time delay unit 31 from the intermediate analog signal 11, is connected to the second input of the adder 29.

Upon start of the system, the time delay 32 for the time delay units 26, 31 is calculated. In the time correlation unit 33, the DRM signal 8 is correlated with the corrected DRM signal 23. The obtained time delay 32 is forwarded to the time delay units 26 and 31. The time delay 31 delays the intermediate analogue signal 11 by an amount that allows the power-adjusted and corrected DRM signal 28 to be correctly recombined with the delayed intermediate analogue signal 30, in order to generate the improved simulcast signal 34. Finally, the envelope demodulator 35 of the receiver demodulates the improved simulcast signal 34 to obtain the analogue audio or transmission signal.

Both the time delay 32 and the gain of the gain control unit 24 can be stored, for each station, in a static memory of the receiver. Thus, they don't have to be calculated each time the receiver is switched to a new program and the new program uses the same mode of DRM, in terms of symbol duration, for operation.

## Claims

1. Receiver for a simulcast signal, said simulcast signal comprising a digital signal part and an analogue signal part, comprising

- filter means, preferably bandpass filter means (6), for separating an initial digital signal (8) from said simulcast signal (5);
- subtractor means (10) for subtracting said initial digital signal (8) from said simulcast signal, in order to obtain an intermediate analogue signal (11);

**characterized by**

- a channel estimation and equalization unit (17) for estimating the channel's frequency response and for removing channel impairments due to frequency-selective fading and/or to non-symmetric receiver input filters, in order to generate a corrected digital signal (23);
- adder means (29) for adding said corrected digital signal or a signal derived therefrom (28) to said intermediate analogue signal (11), in order to obtain an improved simulcast signal (34).

2. Receiver according to claim 1, **characterized in that** said receiver further comprises decoding means for decoding said corrected digital signal, and/or demodulation means for demodulating said improved simulcast signal (34).

3. Receiver according to claim 1 or 2, **characterized by** a FFT unit located in the digital signal processing path before said channel estimation and equalization means, for converting said initial digital signal from the time domain into the frequency domain, whereby said channel estimation and equalization unit processes said initial digital signal in the frequency domain.

4. Receiver according to claim 3, **characterized by** an IFFT unit located in the digital signal processing path behind said channel estimation and equalization means, for converting said corrected digital signal back into the time domain.

5. Receiver according to anyone of the preceding claims, **characterized by** means for removing the initial digital signal's guard intervals, which are located in the digital signal processing path before said channel estimation and equalization means, and by means for re-inserting corrected versions of said guard intervals into the corrected digital signal, which are located in the digital signal processing path after said channel estimation and equalization means.

6. Receiver according to anyone of the preceding claims, **characterized by** means for performing a time and frequency correction of said initial digital signal, said means being located in the digital signal processing path before said channel estimation and equalization means, and/or by means for re-inserting the corrected time and frequency offsets after said channel estimation and equalization means.

7. Receiver according to anyone of the preceding claims, **characterized by** a gain control unit for comparing the signal power of said corrected digital signal to the signal power of said initial digital signal, and for adapting the gain such that the signal power of said corrected digital signal is equal to the signal power of said initial digital signal.

8. Receiver according to claim 7, **characterized in that** said gain control unit averages the signal power of said initial digital signal and of said corrected digital signal over a predefined period of time when determining said gain.

9. Receiver according to claim 7 or 8, **characterized in that** said gain control unit is provided with the respective signal powers by said channel estimation and equalization means on a symbol by symbol basis and updates said gain accordingly.

10. Receiver according to anyone of the preceding claims, **characterized by** a time-correlation unit for correlating said corrected digital signal with said initial digital signal in order to determine a time delay between said two signals.

11. Receiver according to claim 10, **characterized in that** said analogue signal processing path comprises a time delay unit for delaying said intermediate analogue signal by the time delay determined by said time-correlation unit.

12. Receiver according to anyone of claims 7 to 11, **characterized by** memory means for storing said gain and/or said time delay for each station.

13. Receiver according to anyone of the preceding claims, **characterized in that** said initial digital signal is modulated according to the OFDM (Orthogonal Frequency Division Multiplex) method.

14. Receiver according to anyone of the preceding claims, **characterized in that** said initial digital signal is a radio signal according to the DRM (Digital Radio Mondiale) standard.

15. Method for receiving a simulcast signal transmitted via a distorted channel, said simulcast signal comprising a digital signal part and an analogue signal part, **characterized by** the following steps:

    - separating an initial digital signal (8) from said simulcast signal (5);
    - subtracting said initial digital signal (8) from said simulcast signal in order to obtain an intermediate analogue signal (11);
    - performing a channel estimation and equalization (17) in order to estimate the channel's frequency response and to remove channel impairments due to frequency selective fading and/or to non-symmetric receiver input filters, in order to generate a corrected digital signal (23);
    - adding said corrected digital signal or a signal derived therefrom (28) to said intermediate analogue signal, in order to obtain an improved simulcast signal (34).

16. Method according to claim 15, **characterized by** converting said initial digital signal from the time domain into the frequency domain, and performing said channel estimation and equalization of said initial digital signal in the frequency domain.

17. Method according to claim 16, **characterized by** converting said corrected digital signal back into the time domain.

18. Method according to anyone of claims 15 to 17, **characterized by** removing the initial digital signal's guard intervals before performing said channel estimation and equalization, and by re-inserting corrected versions of said guard intervals into said corrected signal after said channel estimation and equalization has been performed.

19. Method according to anyone of claims 15 to 18, **characterized by** performing a time and frequency correction of said initial digital signal before performing said channel estimation and equalization, and/or by re-inserting the corrected time and frequency correction offsets after said channel estimation and equalization.

20. Method according to anyone of claims 15 to 19, **characterized by** comparing the signal power of said corrected digital signal to the signal power of said initial digital signal, and adapting the gain such that the signal power of said corrected digital signal is equal to the signal power of said initial digital signal.

21. Method according to claim 20, **characterized by** averaging the signal power of said initial digital signal and of said corrected digital signal over a predefined period of time when determining said gain.

22. Method according to anyone of claims 15 to 21, **characterized by** correlating said corrected digital signal with said initial digital signal in order to determine a time delay between said two signals.

**23.** Method according to claim 25, **characterized by** delaying said intermediate analogue signal by the time delay determined by said time-correlation unit.

**24.** Computer program product, comprising computer program means adapted to embody the features of the receiver as defined in anyone of claims 1 to 14 or to perform the method steps as defined in anyone of claims 15 to 23 when said computer program product is executed on a computer, digital signal processor, or the like.

**25.** Computer readable storage medium, storing thereon a computer program product according to claim 24.

Fig. 1

Fig. 2

**European Patent Office**

## EUROPEAN SEARCH REPORT

Application Number

EP 02 01 2734

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | US 5 588 022 A (DAPPER MARK J ET AL) 24 December 1996 (1996-12-24) * column 3, line 33 - column 5, line 38; figure 1 * | 1-25 | H04H1/00 H04B1/10 H04L27/26 |
| Y | US 5 956 373 A (EVANS DAVID W ET AL) 21 September 1999 (1999-09-21) * column 10, line 26 - column 11, line 13; figure 15 * | 1-25 | |
| A | WO 00 21228 A (USA DIGITAL RADIO INC) 13 April 2000 (2000-04-13) * page 7, line 1 - page 9, line 20; figure 2 * | 1-25 | |
| A | SENGER P: "DRM - DIGITAL RADIO MONDIALE EIN WELTWEITES KONSORTIUM FUER EINEN NEUEN DIGITALEN STANDARD" RUNDFUNKTECHNISCHE MITTEILUNGEN, MENSING. NORDERSTEDT, DE, vol. 43, no. 1, March 1999 (1999-03), pages 29-35, XP000824065 ISSN: 0035-9890 * the whole document * | 1-25 | TECHNICAL FIELDS SEARCHED (Int.Cl.7) H04H H04B H04L |

The present search report has been drawn up for all claims

| Place of search | Date of completion of the search | Examiner |
|---|---|---|
| MUNICH | 26 September 2002 | Willems, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 370 017 A1

## ANNEX TO THE EUROPEAN SEARCH REPORT
## ON EUROPEAN PATENT APPLICATION NO.

EP 02 01 2734

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2002

| Patent document cited in search report | | Publication date | Patent family member(s) | | Publication date |
|---|---|---|---|---|---|
| US 5588022 | A | 24-12-1996 | AT | 201540 T | 15-06-2001 |
| | | | AU | 687198 B2 | 19-02-1998 |
| | | | AU | 2374595 A | 25-09-1995 |
| | | | BR | 9507009 A | 16-09-1997 |
| | | | CA | 2185003 A1 | 14-09-1995 |
| | | | CN | 1146835 A | 02-04-1997 |
| | | | DE | 69521033 D1 | 28-06-2001 |
| | | | DE | 69521033 T2 | 08-11-2001 |
| | | | EP | 0749650 A1 | 27-12-1996 |
| | | | JP | 10500810 T | 20-01-1998 |
| | | | NZ | 300094 A | 26-01-1998 |
| | | | RU | 2140708 C1 | 27-10-1999 |
| | | | WO | 9524781 A1 | 14-09-1995 |
| US 5956373 | A | 21-09-1999 | NONE | | |
| WO 0021228 | A | 13-04-2000 | US | 6292511 B1 | 18-09-2001 |
| | | | AU | 5807599 A | 26-04-2000 |
| | | | BR | 9914261 A | 03-07-2001 |
| | | | CN | 1331871 T | 16-01-2002 |
| | | | EP | 1119928 A1 | 01-08-2001 |
| | | | WO | 0021228 A1 | 13-04-2000 |
| | | | US | 2002012392 A1 | 31-01-2002 |

For more details about this annex : see Official Journal of the European Patent Office, No. 12/82

EPO FORM P0459

11